(19) Europäisches Patentamt
European Patent Office
Office européen des brevets

(11) **EP 3 102 813 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(21) Anmeldenummer: **15701939.9**

(22) Anmeldetag: **31.01.2015**

(51) Int Cl.:
*F02D 41/02* *(2006.01)*     *F02D 13/02* *(2006.01)*
*F02D 41/00* *(2006.01)*

(86) Internationale Anmeldenummer:
**PCT/EP2015/000186**

(87) Internationale Veröffentlichungsnummer:
**WO 2015/117742 (13.08.2015 Gazette 2015/32)**

(54) **VERFAHREN ZUM BETREIBEN EINER BRENNKRAFTMASCHINE SOWIE ENTSPRECHENDE BRENNKRAFTMASCHINE**

METHOD FOR OPERATING AN INTERNAL COMBUSTION ENGINE AND CORRESPONDING INTERNAL COMBUSTION ENGINE

PROCÉDÉ PERMETTANT DE FAIRE FONCTIONNER UN MOTEUR À COMBUSTION INTERNE ET MOTEUR À COMBUSTION INTERNE ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.02.2014 DE 102014001672**

(43) Veröffentlichungstag der Anmeldung:
**14.12.2016 Patentblatt 2016/50**

(73) Patentinhaber: **Audi AG**
**85045 Ingolstadt (DE)**

(72) Erfinder:
• **AZADEH, Reza**
**93055 Regensburg (DE)**
• **SONNER, Markus**
**85110 Kipfenberg (DE)**
• **WEBER, Knut**
**85092 Koesching (DE)**

(74) Vertreter: **Askaryar, Jama**
**Audi AG**
**Patentabteilung**
**85045 Ingolstadt (DE)**

(56) Entgegenhaltungen:
**EP-A1- 2 674 602     EP-A2- 1 298 292**
**AT-A2- 501 678     DE-B3- 10 259 052**

Beschreibung

**Beschreibung**

Die Erfindung betrifft ein Verfahren zum Betreiben einer Brennkraftmaschine mit den Merkmalen des Oberbegriffs des Anspruchs 1. Die Erfindung betrifft weiterhin eine Brennkraftmaschine.

Die Brennkraftmaschine dient beispielsweise dem Antreiben eines Kraftfahrzeugs, also dem Bereitstellen eines auf ein Antreiben des Kraftfahrzeugs gerichteten Drehmoments. Die Brennkraftmaschine ist aufgeladen und weist zu diesem Zweck den Abgasturbolader auf. Der Abgasturbolader verfügt über eine Turbine und einen mit der Turbine wirkverbundenen Verdichter. Der Turbine wird das von der Brennkraftmaschine während ihres Betriebs erzeugte Abgas zugeführt, wobei die Turbine die in dem Abgas enthaltene Enthalpie und/oder Strömungsenergie in kinetische Energie, insbesondere eine Rotationsbewegung, umsetzt. Die kinetische Energie wird zum Antreiben des Verdichters verwendet.

Der Verdichter dient dazu, angesaugte Luft, insbesondere Frischluft, zu verdichten, also auf ein höheres Druckniveau zu bringen. Die verdichtete Luft wird anschließend der Brennkraftmaschine zugeführt, wo sie zur Durchführung der Verbrennung beiträgt. Durch die Erhöhung des Druckniveaus vor dem Zuführen der Luft in die Brennkraftmaschine kann die während der Verbrennung zur Verfügung stehende Luftmenge vergrößert werden, sodass die Leistung der Brennkraftmaschine deutlich erhöht werden kann.

Weiterhin verfügt die Brennkraftmaschine über den wenigstens einen Katalysator, welcher der Reinigung der von der Brennkraftmaschine erzeugten Abgase dient. Die Abgase werden also durch den Katalysator hindurchgeleitet und erst anschließend in eine Umgebung der Brennkraftmaschine ausgeleitet. Bevorzugt ist der Katalysator stromabwärts des Abgasturboladers angeordnet, sodass das Abgas der Brennkraftmaschine zunächst den Abgasturbolader und erst anschließend den Katalysator durchströmt.

Schließlich verfügt die Brennkraftmaschine über den variablen Ventiltrieb, welcher die Beeinflussung von Steuerzeiten wenigstens eines Einlassventils und/oder eines Auslassventils der Brennkraftmaschine ermöglicht. Bevorzugt weist die Brennkraftmaschine mehrere Zylinder auf, wobei jedem der Zylinder zumindest ein Einlassventil und ein Auslassventil zugeordnet sind. Das Einlassventil und das Auslassventil beziehungsweise alle Einlassventile und alle Auslassventile der Brennkraftmaschine sind dem Ventiltrieb zugeordnet. Die variable Ausgestaltung des Ventiltriebs ermöglicht es nun, entweder die Steuerzeiten der Einlassventile, der Auslassventile oder sowohl von Einlassventilen und Auslassventilen gezielt zu beeinflussen beziehungsweise einzustellen.

In der zumindest einen Betriebsart ist es vorgesehen, dass der variable Ventiltrieb derart eingestellt wird, dass eine Ventilüberschneidung vorliegt. Darunter ist zu verstehen, dass bei einem Gaswechsel in einem der Zylinder das wenigstens eine Einlassventil und das wenigstens eine Auslassventil dieses Zylinders gleichzeitig geöffnet sind. Durch das Einlassventil in den Zylinder einströmende Luft kann also unmittelbar wieder durch das Auslassventil ausströmen. Liegt eine positive Druckdifferenz zwischen der Einlassseite strömungstechnisch vor dem Einlassventil und der Auslassseite strömungstechnisch nach dem Auslassventil vor, so wird der Zylinder mit Luft, insbesondere Frischluft gespült, wobei ein Teil der Luft das in dem Zylinder befindliche heiße Abgas auf die Auslassseite, insbesondere in einen Abgaskrümmer der Brennkraftmaschine, mitnimmt.

Durch eine solche Maßnahme erhöht sich die Füllung im Vergleich zu einem konventionellen Betrieb, bei welchem keine Ventilüberschneidung vorliegt, erheblich. Weil gleichzeitig ein erhöhter Massenstrom auf der Auslassseite vorliegt, verbessert sich auch das Ansprechverhalten des Abgasturboladers, insbesondere bei niedrigen Drehzahlen der Brennkraftmaschine. Zudem wird die Menge des in dem Zylinder verbleibenden Abgases, welches auch als Restgasanteil bezeichnet wird, verringert und eine Senkung der Brennraumtemperatur bewirkt. Dies führt zu verminderter Klopfneigung, insbesondere bei Volllast der Brennkraftmaschine. Die Ventilüberschneidung wird durch den Ventilüberschneidungsparameter bestimmt. Je größer also der Ventilüberschneidungsparameter gewählt wird, umso größer ist die Ventilüberschneidung. Bei einem Ventilüberschneidungsparameter von Null liegt dagegen keine Ventilüberschneidung vor. Der Ventilüberschneidungsparameter wird nun in der zumindest einen Betriebsart bestimmt und an dem Ventiltrieb eingestellt, sodass das Betreiben der Brennkraftmaschine mit der entsprechenden Ventilüberschneidung durchgeführt wird.

Ein Nachteil der Ventilüberschneidung besteht jedoch darin, dass die erhöhte Luftmenge, welche einer größeren Sauerstoffmenge entspricht, zu einer Sättigung der Sauerstoffspeicherfähigkeit des Katalysators und damit zum Einbruch der $NO_x$-Konvertierungsleistung führen kann. Entsprechend besteht ein Konflikt zwischen den vorstehend erläuterten Vorteilen und dem Nachteil, dass Emissionsgrenzwerte, insbesondere für $NO_x$, verletzt werden können.

Eine mögliche Abhilfe besteht darin, dass die Brennkraftmaschine mit einem fetteren Kraftstoff-Luft-Gemisch betrieben wird. Dies führt durch Nachverbrennung zu einer Verbesserung beziehungsweise Verringerung der Emissionen, verursacht jedoch gleichzeitig eine höhere thermische Belastung des Katalysators. Zudem wird der Kohlenstoffdioxidausstoß durch den erhöhten Einsatz von Kraftstoff vergrößert. Auch der Partikelausstoß kann sich verschlechtern.

Aus dem Stand der Technik sind beispielsweise die Druckschriften DE 10 2012 204 885 ' B3 sowie GB 2 367 859 A bekannt. Erstere beschreibt ein Verfahren zum Betreiben einer Brennkraftmaschine mit mindestens einem Zylinder, welche ein Abgasabführsystem zum Abführen der Abgase und mindestens ein in diesem Abgasabführsystem angeordnetes Abgasnachbehandlungssystem aufweist, bei dem stromaufwärts des mindestens einen Abgasnachbehandlungssystems eine erste Lambda-Sonde zur Erfassung eines ersten Luftverhältnisses angeordnet wird und stromabwärts des mindestens einen Abgasnachbehandlungssystems eine zweite Lambda-Sonde zur Erfassung eines zweiten Luftverhältnisses angeordnet wird. In Abhängigkeit von einem Betrieb der Brennkraftmaschine soll nun entweder die erste Lambda-Sonde oder die zweite Lambda-Sonde für die Regelung des Luftverhältnisses mittels Motorsteuerung verwendet werden, wobei mindestens ein in der Motorsteuerung hinterlegtes Kennfeld unter Verwendung von mindestens zwei Betriebsparametern der Brennkraftmaschine als Eingangsgrößen vorgibt, welche Lambda-Sonde zur Regelung des Luftverhältnisses zu verwenden ist.

Weiterhin ist aus dem Stand der Technik die Druckschrift DE 103 03 705 A1 bekannt. Diese beschreibt ein Verfahren zum Betreiben einer mit Kraftstoffdirekteinspritzung arbeitenden und mit einer Aufladevorrichtung versehenen Brennkraftmaschine, die einen variablen Ventiltrieb aufweist. Dabei wird die Ventilüberschneidung der Gaswechselventile für einen Volllastbetrieb oder zumindest volllastnahen Betrieb der Brennkraftmaschine durch Einstellen der Gaswechselventilsteuerzeiten auf stationäre Sollwerte eingestellt und bei einer erhöhten Lastanforderung in den aufgeladenen Betrieb erfolgt eine dynamische Korrektur der stationären Sollwerte in Richtung zu höheren Ventilüberschneidungswerten nach Ladungswechsel-OT. Die dynamischen Korrekturwerte werden mittels eines ersten Faktors gewichtet, welcher in Abhängigkeit der Druckdifferenz zwischen Drucksollwert und tatsächlichem Druck im Ansaugkanal ist und mittels eines zweiten Faktors gewichtet, welche die Temperatur des Abgaskatalysators berücksichtigt.

Weiterhin beschreibt die Druckschrift AT 501 678 A2 ein Verfahren zum Betreiben einer fremdgezündeten Brennkraftmaschine mit direkter Kraftstoffeinspritzung, welche zumindest eine Abgasturbolader- und zumindest eine Abgasnachbehandlungseinrichtung aufweist, mit zumindest einer Einrichtung zur Veränderung der Einlass- und/oder Auslasssteuerzeit, wobei die Brennkraftmaschine insbesondere bei niedriger Drehzahl mit einer definierten Ventilüberschneidung von Ein- und Auslassventilen zum Spülen des Brennraumes betrieben wird, und wobei die Ventilüberschneidung in Abhängigkeit zumindest eines Motorbetriebsparameters verändert wird. Um das Drehmoment der Brennkraftmaschine, insbesondere bei niedriger Motordrehzahl zu verbessern, ist vorgesehen, dass das Spülen nach Erreichen eines Schwellwerts des Motorbetriebsparameters begrenzt oder vermindert wird.

Schließlich zeigt die Druckschrift DE 10 2006 025 050 B4 ein Verfahren und eine Vorrichtung zum Betrieb einer Abgasnachbehandlungsanlage sowie die Druckschrift DE 10 2011 005 516 A1 ein Verfahren und eine Vorrichtung zur Erfassung mindestens einer Eigenschaft eines Gases.

Es ist nun Aufgabe der Erfindung, ein Verfahren zum Betreiben einer Brennkraftmaschine vorzuschlagen, welche gegenüber bekannten Verfahren Vorteile aufweist, insbesondere ein effizientes Betreiben der Brennkraftmaschine in einer Vielzahl von Betriebsbereichen ermöglicht.

Dies wird erfindungsgemäß mit einem Verfahren mit den Merkmalen des Anspruchs 1 erreicht. Dabei ist vorgesehen, dass als Katalysatorzustandsparameter ein Sauerstofffüllstand des Katalysators und eine Gesamtbetriebsdauer des Katalysators sowie als Abgasturboladerzustandsparameter eine Abgasturboladerdrehzahl verwendet werden. Der Ventilüberschneidungsparameter wird vor dem Einstellen an dem Ventiltrieb anhand wenigstens eines Katalysatorzustandsparameters und/oder wenigstens eines Abgasturboladerzustandsparameters angepasst. Üblicherweise wird der einmal bestimmte Ventilüberschneidungsparameter unmittelbar an dem Ventiltrieb eingestellt. Das Bestimmen erfolgt dabei beispielsweise anhand wenigstens eines Betriebsparameters der Brennkraftmaschine, insbesondere des Betriebspunkts der Brennkraftmaschine. Der Betriebspunkt wird insbesondere von der Drehzahl und dem erzeugten Drehmoment der Brennkraftmaschine charakterisiert.

Der Ventilüberschneidungsparameter wird dabei insbesondere statisch bestimmt. Das bedeutet, dass er für eine Vielzahl von Werten für den wenigstens einen Betriebsparameter einmalig ermittelt, beispielsweise an einer Referenzbrennkraftmaschine, und anschließend in der Brennkraftmaschine, insbesondere einem Steuergerät der Brennkraftmaschine, hinterlegt wird. Somit ist der Ventilüberschneidungsparameter beziehungsweise dessen Wert über die gesamte Lebensdauer der Brennkraftmaschine für denselben Wert des Betriebsparameters konstant. Dabei ist er derart ausgelegt, dass er vorzugsweise über die gesamte Lebensdauer der Brennkraftmaschine hinweg eine Einhaltung der Emissionsgrenzwerte sicherstellt.

Das bedeutet jedoch, dass die Ventilüberschneidung lediglich vergleichsweise klein gewählt werden kann, sodass das Potential des variablen Ventiltriebs nicht vollständig ausgeschöpft werden kann. Auch kann die Brennkraftmaschine nicht ohne Weiteres für unterschiedliche Fahrzeugtypen, insbesondere für Fahrzeuge unterschiedlicher Gewichtsklassen, eingesetzt werden, weil für diese, beispielsweise zur Einhaltung der Emissionsgrenzwerte, die Ventilüberschneidung in Abhängigkeit von dem Betriebspunkt der Brennkraftmaschine unterschiedlich gewählt werden muss.

Aus diesem Grund ist nun die nachträgliche Anpassung des Ventilüberschneidungsparameters vorgesehen, wobei dieses Anpassen auf der Grundlage des Katalysatorzustandsparameters oder des Abgasturboladerzustandsparameters realisiert ist. Auch ein Anpassen auf Grundlage beider Parameter kann vorgesehen sein. Der Ventilüberschneidungsparameter liegt also vorzugsweise als Funktion von dem Betriebspunkt der Brennkraftmaschine einerseits und dem Katalysatorzustandsparameter und/oder dem Abgasturboladerzustandsparameter andererseits vor. Erst nach dem Anpassen wird der Ventilüberschneidungsparameter, welcher die einzustellende Ventilüberschneidung charakterisiert, an dem Ventiltrieb eingestellt.

Eine weitere Ausgestaltung der Erfindung sieht vor, dass als Betriebsart eine Scavenging-Betriebsart verwendet wird, für welche die Drehzahl der Brennkraftmaschine bezogen auf eine Maximaldrehzahl höchstens 50 %, höchstens 40 %, höchstens 30 %, höchstens 20 % oder höchstens 10 % und/oder das Drehmoment bezogen auf ein Maximaldrehmoment mindestens 25 %, mindestens 50 %, mindestens 60 %, mindestens 70 %, mindestens 80 % oder mindestens 90 % beträgt. Bei aufgeladenen Brennkraftmaschinen, insbesondere aufgeladenen Otto-Brennkraftmaschinen, besteht der Wunsch, ein hohes Eckmoment bei niedriger Drehzahl schnell zu erreichen. Um diese Anforderung zu erfüllen, wird die Brennkraftmaschine in der Scavenging-Betriebsart betrieben, in welcher im Eckmomentbereich, welcher durch hohe Last und gleichzeitig niedriger Drehzahl charakterisiert ist, eine vergleichsweise große Ventilüberschneidung einstellt. Auf diese Art und Weise können die bereits vorstehend erläuterten Vorteile erzielt werden.

Insbesondere kann auch bei geringer Drehzahl der Brennkraftmaschine ein großes Drehmoment erzielt werden. Beispielsweise beträgt das Verhältnis von eingestellter beziehungsweise aktueller Drehzahl der Brennkraftmaschine zu der Maximaldrehzahl, also der höchsten in einem Normalbetrieb der Brennkraftmaschine vorgesehenen Drehzahl, höchstens 50 %, höchstens 40 %, höchstens 30 %, höchstens 20 % oder höchstens 10 %. Gleichzeitig oder alternativ kann es vorgesehen, dass das Verhältnis aus eingestelltem beziehungsweise aktuellem Drehmoment und dem Maximaldrehmoment, also dem maximal mittels der Brennkraftmaschine erzielbaren Drehmoment, mindestens 25 %, mindestens 50 %, mindestens 60 %, mindestens 70 %, mindestens 80 % oder mindestens 90 % beträgt.

Eine Weiterbildung der Erfindung sieht vor, dass als Katalysatorzustandsparameter ein Sauerstofffüllstand des Katalysators, eine Katalysatortemperatur, ein Katalysatorvolumen und/oder eine Gesamtbetriebsdauer des Katalysators verwendet wird, und/oder dass als Abgasturboladerzustandsparameter eine Abgasturboladerdrehzahl verwendet wird. Der Katalysator verfügt über einen Zwischenspeicher zur Zwischenspeicherung von Sauerstoff. Insoweit ist er bevorzugt als Speicherkatalysator ausgebildet. Der Sauerstofffüllstand beschreibt die momentane Befüllung des Katalysators beziehungsweise des Zwischenspeichers mit Sauerstoff, vorzugsweise relativ zu einem erzielbaren Maximalfüllstand. Die Katalysatortemperatur beschreibt entweder die Temperatur des Katalysators selbst oder eine Temperatur des den Katalysator durchströmenden Abgases. Das Katalysatorvolumen ist das strömungstechnisch effektive Volumen, welches also von Abgas der Brennkraftmaschine durchströmt wird.

Die Gesamtbetriebsdauer des Katalysators charakterisiert das Alter des Katalysators. Mit zunehmender Gesamtbetriebsdauer verschlechtert sich üblicherweise die Fähigkeit des Katalysators, das Abgas von den darin enthaltenen Schadstoffen zu befreien und/oder die Fähigkeit des Zwischenspeichers, Sauerstoff zwischenzuspeichern. Weil jedoch das Durchführen der Scavenging-Betriebsart unter gleichzeitiger Einhaltung der Emissionsgrenzwerte eine verfügbare Kapazität des Zwischenspeichers voraussetzt, ist die mögliche Ventilüberschneidung zumindest mittelbar auch von der Gesamtbetriebsdauer des Katalysators abhängig. Als Abgasturboladerzustandsparameter kann die Abgasturboladerdrehzahl herangezogen werden. Aus dieser kann insbesondere der Schluss gezogen werden, dass bereits eine ausreichend hohe Drehzahl des Abgasturboladers vorliegt, das sogenannte "Turboloch" folglich überwunden ist. Ist dies der Fall, kann auch mit einer geringeren Ventilüberschneidung ein ausreichend hohes Drehmoment erzielt werden. Entsprechend kann in diesem Fall die Ventilüberschneidung reduziert werden.

Eine bevorzugte Ausgestaltung der Erfindung sieht vor, dass das Bestimmen des Ventilüberschneidungsparameters mittels einer mathematischen Beziehung, einer Tabelle und/oder eines Kennfelds erfolgt. Grundsätzlich kann der Ventilüberschneidungsparameter auf beliebige Art und Weise ermittelt werden. Bevorzugt werden jedoch die vorstehend genannten Vorgehensweisen herangezogen. Besonders bevorzugt ist das Bestimmen mithilfe des Kennfelds. In diesem ist beispielsweise der Ventilüberschneidungsparameter in Abhängigkeit von der Drehzahl und/oder dem Drehmoment der Brennkraftmaschine, bevorzugt also von dem Betriebspunkt der Brennkraftmaschine, hinterlegt. Das bedeutet, dass zum Bestimmen des Ventilüberschneidungsparameters der Betriebspunkt als Eingangsgröße für das Kennfeld verwendet wird, während sich der Ventilüberschneidungsparameter als Ausgangsgröße des Kennfelds ergibt. Von Bedeutung ist dabei, dass sowohl die mathematische Beziehung, die Tabelle und das Kennfeld statisch sind, also über die Lebensdauer der Brennkraftmaschine nicht verändert werden. Das bedeutet, dass derselben Drehzahl und/oder demselben Drehmoment stets derselbe Ventilüberschneidungsparameter zugeordnet wird.

Weiterhin kann in einer bevorzugten Ausführungsform der Erfindung vorgesehen sein, dass der Sauerstofffüllstand mittels eines Modells anhand eines Lambdawerts und/oder eines Abgasmassenstroms ermittelt und beim Anpassen des Ventilüberschneidungsparameters die Ventilüberschneidung verringert wird, wenn der Sauerstofffüllstand einen Vorgabefüllstand überschreitet. Der Sauerstofffüllstand des Katalysators beziehungsweise des Zwischenspeichers kann beispielsweise durch Integration über der Zeit ermittelt werden. Zu diesem Zweck wird insbesondere die Beziehung

$$m_{O2} = 23\% * \int_{t_2}^{t_2} \left(1 - \frac{1}{\lambda}\right) * m_L * dt .$$

herangezogen. Die Beziehung liefert als Ausgangsgröße die in dem Zwischenspeicher enthaltene Sauerstoffmasse. Diese kann nun beispielsweise in Bezug zu dem Maximalfüllstand gesetzt werden. Selbstverständlich kann jedoch auch der absolute Wert für den Sauerstofffüllstand herangezogen werden. Überschreitet nun der Sauerstofffüllstand einen Vorgabefüllstand, so kann nicht der bestimmte Ventilüberschneidungsparameter herangezogen werden. Vielmehr ist es notwendig, diesen derart anzupassen, dass die Ventilüberschneidung verringert wird, um eine weitere Beladung des Katalysators mit Sauerstoff zumindest zu verzögern. Der Vorgabefüllstand beträgt beispielsweise - bezogen auf den Maximalfüllstand - mindestens 50 %, mindestens 60 %, mindestens 70 %, mindestens 80 % oder mindestens 90 %.

Eine bevorzugte Ausgestaltung der Erfindung sieht vor, dass die Verringerung der Ventilüberschneidung aus der Differenz zwischen dem Sauerstofffüllstand und dem Vorgabefüllstand bestimmt wird. Die Differenz wird insbesondere bestimmt, sobald der Sauerstofffüllstand den Vorgabefüllstand überschritten hat. Bevorzugt ist es nun vorgesehen, dass die Ventilüberschneidung umso stärker verringert wird, je größer die Differenz zwischen dem Sauerstofffüllstand und dem Vorgabefüllstand ist. So kann beispielsweise bei einer kleineren Differenz eine kleinere Verringerung der Ventilüberschneidung vorgesehen sein als bei einer größeren Differenz. Vorzugsweise wird die Verringerung der Ventilüberschneidung abhängig von der Differenz ermittelt, insbesondere proportional zu der Differenz.

Eine weitere Ausgestaltung der Erfindung sieht vor, dass der Vorgabefüllstand aus der Katalysatortemperatur, dem Katalysatorvolumen und/oder der Gesamtbetriebsdauer des Katalysators ermittelt wird. Anhand wenigstens einer der genannten Größen, insbesondere aller genannten Größen, lässt sich beispielsweise der Maximalfüllstand ermitteln, aus welchem anschließend, insbesondere mithilfe eines konstanten Faktors, der Vorgabefüllstand bestimmt wird. Selbstverständlich ist es jedoch auch möglich, aus einer oder mehreren der genannten Größen, insbesondere aus allen der genannten Größen, unmittelbar den Vorgabefüllstand zu ermitteln.

Eine bevorzugte Weiterbildung der Erfindung sieht vor, dass beim Anpassen des Ventilüberschneidungsparameters die Ventilüberschneidung verringert wird, wenn die Abgasturboladerdrehzahl größer oder gleich einer Vorgabedrehzahl ist. Wie bereits vorstehend erläutert, kann die Ventilüberschneidung kleiner gewählt werden wenn sichergestellt ist, dass der Abgasturbolader sich nicht mehr in dem sogenannten "Turboloch" befindet, seine Drehzahl also bereits ausreichend groß ist.

Als Schwellenwert wird hierfür die Vorgabedrehzahl herangezogen. Diese wird beispielsweise aus dem Betriebspunkt der Brennkraftmaschine, also der Drehzahl und dem Drehmoment, ermittelt. Alternativ kann die Vorgabedrehzahl als Anteil einer Maximaldrehzahl des Abgasturboladers, also einer maximal erreichbaren Drehzahl desselben, festgelegt werden. Beispielsweise beträgt die Vorgabedrehzahl mindestens 10 %, mindestens 20 %, mindestens 30 %, mindestens 40 % oder mindestens 50 % dieser Maximaldrehzahl.

Schließlich kann vorgesehen sein, dass aus einer in einen Zylinder der Brennkraftmaschine eingebrachten Luftmenge eine Kraftstoffeinspritzmenge ermittelt wird, wobei die Kraftstoffeinspritzmenge angepasst wird, wenn der Sauerstofffüllstand den Vorgabefüllstand überschreitet und/oder wenn die Katalysatortemperatur eine Vorgabetemperatur überschreitet. Zum Betreiben der Brennkraftmaschine müssen in den Zylinder sowohl Luft als auch Kraftstoff eingebracht werden. Das Einbringen der Luft erfolgt durch geeignetes Einstellen des Ventiltriebs, beispielsweise in der Scavenging-Betriebsart. Die Luftmenge wird beispielsweise mittels eines Modells berechnet und/oder unter Verwendung wenigstens eines Sensors gemessen, ist also zumindest im Rahmen einer gewissen Genauigkeit bekannt. Auf Grundlage der Luftmenge wird nun die Kraftstoffeinspritzmenge bestimmt, wobei insbesondere ein Verbrennungsluftverhältnis berücksichtigt wird. Beispielsweise ist im Falle einer stöchiometrischen Verbrennung das Verbrennungsluftverhältnis gleich Eins.

Die Kraftstoffeinspritzmenge wird aus der Luftmenge mithilfe einer mathematischen Beziehung, einer Tabelle und/oder eines Kennfelds ermittelt. Selbstverständlich kann grundsätzlich jedoch eine beliebige Bestimmungsmethode herangezogen werden. Ebenso wie die Bestimmung des Ventilüberschneidungsparameters ist die Bestimmung der Kraftstoffeinspritzmenge zunächst statisch. Aus diesem Grund wird auch hier eine Anpassung vorgenommen, wenn zumindest eine bestimmte Bedingung zutrifft. Vorzugsweise wird dabei auf eine Überschreitung des Vorgabefüllstands durch den Sauerstofffüllstand und/oder eine Überschreitung der Vorgabetemperatur durch die Katalysatortemperatur geprüft. Bevorzugt wird die Kraftstoffeinspritzmenge nach oben angepasst, also bei Zutreffen wenigstens einer der Bedingungen vergrößert. Durch dieses Vergrößern wird der in dem Abgas der Brennkraftmaschine enthaltene Luftüberschuss verringert, sodass der Sauerstofffüllstand des Katalysators langsamer anwächst oder bevorzugt konstant gehalten beziehungsweise sogar verringert wird. Zudem wird durch den zusätzlichen Kraftstoff die Temperatur des Abgases verringert, sodass der Anstieg der Katalysatortemperatur verlangsamt oder bevorzugt unterbunden wird. Auch eine Verringerung der Katalysatortemperatur kann auf diese Art und Weise erreicht werden.

Die Erfindung betrifft weiterhin eine Brennkraftmaschine, insbesondere zur Durchführung des Verfahrens gemäß den vorstehenden Ausführungen, mit zumindest einem Abgasturbolader, wenigstens einem Katalysator und einem variablen Ventiltrieb, wobei vorgesehen ist, in zumindest einer Betriebsart der Brennkraftmaschine einen Ventilüberschneidungsparameter zu bestimmen und an dem Ventiltrieb einzustellen, wobei die Brennkraftmaschine dazu ausgebildet ist, den Ventilüberschneidungsparameter vor dem Einstellen an dem Ventiltrieb anhand wenigstens eines Katalysatorzustandsparameters und/oder wenigstens eines Abgasturboladerzustandsparameters anzupassen. Dabei ist vorgesehen, dass als Katalysatorzustandsparameter ein Sauerstofffüllstand des Katalysators und eine Gesamtbetriebsdauer des Katalysators sowie als Abgasturboladerzustandsparameter eine Abgasturboladerdrehzahl verwendet werden. Auf die Vorteile einer derartigen Ausgestaltung der Brennkraftmaschine beziehungsweise einer derartigen Vorgehensweise wurde bereits eingegangen. Die Brennkraftmaschine sowie das Verfahren können gemäß den vorstehenden Ausführungen weitergebildet sein, sodass insoweit auf diese verwiesen wird.

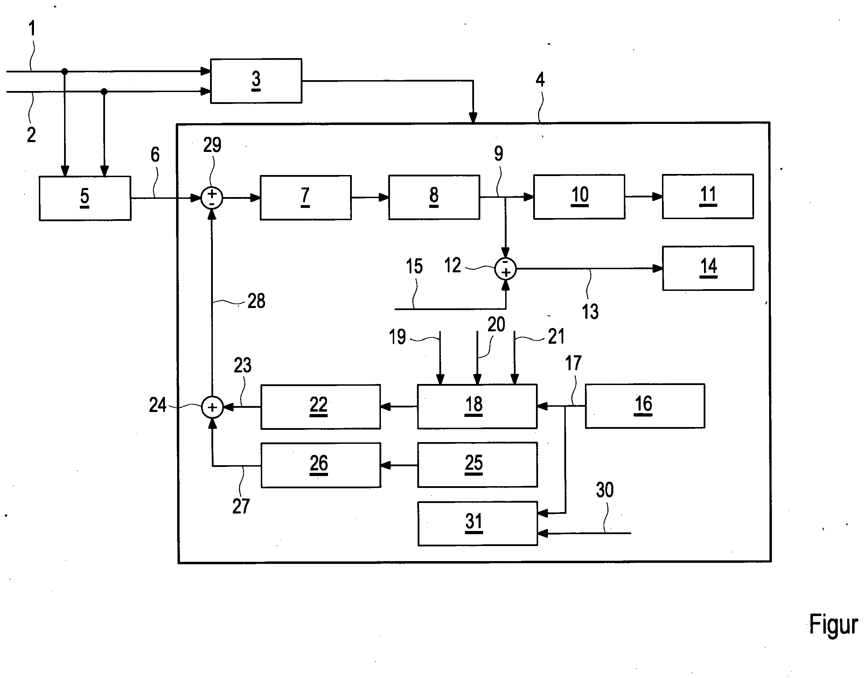

Die Erfindung wird nachfolgend anhand der in der Zeichnung dargestellten Ausführungsbeispiele näher erläutert, ohne dass eine Beschränkung der Erfindung erfolgt. Dabei zeigt die einzige

Figur     eine schematische Darstellung eines Verfahrens zum Betreiben einer Brennkraftmaschine.

In der Figur ist exemplarisch ein Verfahren zum Betreiben einer Brennkraftmaschine dargestellt. Die Brennkraftmaschine verfügt über einen Abgasturbolader, einen Katalysator und einen variablen Ventiltrieb. Der variable Ventiltrieb dient dazu, Steuerzeiten von Einlassventilen und/oder Auslassventilen, bevorzugt von beiden, der Brennkraftmaschine zu verändern. Insbesondere kann mithilfe des Ventiltriebs eine Ventilüberschneidung eingestellt werden. Unter dieser ist ein Zeitraum zu verstehen, während welchem sowohl das Einlassventil als auch das Auslassventil eines Zylinders der Brennkraftmaschine gleichzeitig geöffnet sind. Das Verfahren wird beispielsweise mithilfe eines Steuergeräts der Brennkraftmaschine umgesetzt.

Als Eingangsgröße werden entlang des Pfeils 1 eine Last beziehungsweise ein Drehmoment der Brennkraftmaschine und entlang des Pfeils 2 die Drehzahl der Brennkraftmaschine bereitgestellt. Die Last beziehungsweise das Drehmoment sowie die Drehzahl definieren gemeinsam den Betriebspunkt der Brennkraftmaschine. Im Rahmen einer Auswertung 3 wird festgestellt, ob eine Normalbetriebsart oder eine Scavenging-Betriebsart durchgeführt werden soll. Bei ersterer ist die Ventilüberschneidung geringer als in Scavenging-Betriebsart oder sogar gleich Null. Umgekehrt ist entsprechend die Ventilüberschneidung in der Scavenging-Betriebsart größer als in der Normalbetriebsart, insbesondere größer als Null.

Soll die Scavenging-Betriebsart umgesetzt werden, so wird das in dem Kasten 4 angedeutete Teilverfahren durchgeführt. Zunächst wird aus einem Kennfeld 5, welches das Drehmoment und die Drehzahl als Eingangsgrößen aufweist, ein Ventilüberschneidungsparameter bestimmt, welcher entlang des Pfeils 6 ausgegeben wird. In der Normalbetriebsart wird dieser Ventilüberschneidungsparameter unmittelbar an der Brennkraftmaschine beziehungsweise dem variablen Ventiltrieb eingestellt. In der Scavenging-Betriebsart wird nun in einer Auswertung 7 eine effektive Überschneidung berechnet, aus welcher wiederum im Rahmen einer Auswertung 8 eine durch einen Zylinder der Brennkraftmaschine durchgespülte Luftmasse bestimmt wird. Diese Luftmasse wird entlang des Pfeils 9 ausgegeben.

Im Rahmen einer Auswertung 10 wird aus der Luftmasse eine Spülrate ermittelt, welche im Rahmen einer Auswertung 11 bei einer Berechnung eines Lambda-Sollwerts herangezogen wird. Zusätzlich bildet die im Rahmen der Auswertung 8 bestimmte Luftmasse eine Eingangsgröße eines Subtrahierers 12, dessen Ausgangsgröße entlang des Pfeils 13 ausgegeben und anschließend im Rahmen einer Auswertung 14 zur Ermittlung einer Kraftstoffeinspritzmenge herangezogen wird. Eine andere Eingangsgröße des Subtrahierers 12 stellt eine in den Zylinder eingebrachte Luftmenge dar, welche entlang des Pfeils 15 dem Subtrahierer 12 zugeführt wird. In dem Subtrahierer 12 wird die durchgespülte Luftmasse von der berechneten Luftmasse 15 abgezogen und das Ergebnis der Auswertung 14 zugeführt.

Das erfindungsgemäße Verfahren zeichnet sich dadurch aus, dass der Ventilüberschneidungsparameter vor dem Einstellen an dem Ventiltrieb anhand wenigstens eines Katalysatorzustandsparameters und/oder wenigstens eines Abgasturboladerzustandsparameters angepasst wird. Zu diesem Zweck wird zunächst ein Sauerstofffüllstand des Katalysators im Rahmen einer Auswertung 16 ermittelt und entlang des Pfeils 17 bereitgestellt. Der Sauerstofffüllstand stellt dabei einen Katalysatorzustandsparameter dar. Weitere Katalysatorzustandsparameter werden einer Auswertung 18 entlang der Pfeile 19, 20 und 21 zugeführt, nämlich in dieser Reihenfolge eine Katalysatortemperatur, ein Katalysatorvolumen und eine Gesamtbetriebsdauer des Katalysators. Aus den entlang den Pfeilen 17, 19, 20 und 21 zugeführten Eingangsgrößen wird im Rahmen der Auswertung 18 ein Vorgabefüllstand ermittelt und mit dem Sauerstofffüllstand verglichen. Beispielsweise wird dabei eine Differenz zwischen dem Sauerstofffüllstand und dem Vorgabefüllstand bestimmt. Diese Differenz kann anschließend in einer Auswertung 22 zur Bestimmung eines ersten Korrekturwerts herangezogen werden. Dieser erste Korrekturwert wird entlang des Pfeils 23 einem Addierer 24 zugeführt.

Im Rahmen einer Auswertung 25 kann die Abgasturboladerdrehzahl, welche als Abgasturboladerzustandsparameter herangezogen wird, mit einer Vorgabedrehzahl verglichen werden. Ist die Abgasturboladerdrehzahl größer oder gleich der Vorgabedrehzahl, so wird im Rahmen einer Auswertung 26 ein zweiter Korrekturwert ermittelt und entlang des Pfeils 27 ebenfalls dem Addierer 24 zugeführt. Insbesondere wird der zweite Korrekturwert derart gewählt, dass die Ventilüberschneidung verringert wird, wenn die Abgasturboladerdrehzahl größer oder gleich der Vorgabedrehzahl ist. Die beiden Korrekturwerte werden von dem Addierer 24 addiert und das Ergebnis entlang des Pfeils 28 einem Subtrahierer 29 zugeführt, welcher als weitere Eingangsgröße entlang des Pfeils 6 den Ventilüberschneidungsparameter aufweist. Das Ergebnis des Addierers 24 wird nun zum Anpassen des Ventilüberschneidungsparameters herangezogen, insbesondere wird es von dem Ventilüberschneidungsparameter abgezogen. Das Ergebnis wird anschließend der Auswertung 7 zugeführt und/oder an dem variablen Ventiltrieb eingestellt.

Weiterhin kann es vorgesehen sein, die Katalysatortemperatur entlang des Pfeils 30 einer Auswertung 31 zuzuführen, welche weiterhin als Eingangsgröße den Sauerstofffüllstand des Katalysators aufweist. Wird festgestellt, dass der Sauerstofffüllstand den Vorgabefüllstand überschreitet und/oder die Katalysatortemperatur eine Vorgabetemperatur überschreitet, so kann die zuvor im Rahmen der Auswertung 14 ermittelte Kraftstoffeinspritzmenge auf dieser Grundlage angepasst werden. Mit dem vorstehend beschriebenen Verfahren zum Betreiben der Brennkraftmaschine ist es möglich, auch bei niedrigen Drehzahlen ein sehr hohes Drehmoment mithilfe der Brennkraftmaschine bereitzustellen, wobei gleichzeitig Abgasemissionsgrenzwerte ohne weiteres eingehalten werden können.

## BEZUGSZEICHENLISTE

1 Pfeil
2 Pfeil
3 Auswertung
4 Kasten
5 Kennfeld
6 Pfeil
7 Auswertung
8 Auswertung
9 Pfeil
10 Auswertung
11 Auswertung
12 Subtrahierer
13 Pfeil
14 Auswertung
15 Pfeil
16 Auswertung
17 Pfeil
18 Auswertung
19 Pfeil
20 Pfeil
21 Pfeil
22 Auswertung
23 Pfeil
24 Addierer
25 Auswertung
26 Auswertung
27 Pfeil
28 Pfeil
29 Subtrahierer
30 Pfeil
31 Auswertung

## Patentansprüche

1. Verfahren zum Betreiben einer Brennkraftmaschine mit zumindest einem Abgasturbolader, wenigstens einem Katalysator und einem variablen Ventiltrieb, wobei in zumindest einer Betriebsart der Brennkraftmaschine ein Ventilüberschneidungsparameter bestimmt und an dem Ventiltrieb eingestellt wird, wobei der Ventilüberschneidungsparameter vor dem Einstellen an dem Ventiltrieb anhand wenigstens eines Katalysatorzustandsparameters angepasst wird, **dadurch gekennzeichnet, dass** als Katalysatorzustandsparameter ein Sauerstofffüllstand des Katalysators sowie eine Gesamtbetriebsdauer des Katalysators verwendet werden.

2. Verfahren nach Anspruch 1, **dadurch gekennzeichnet, dass** als Betriebsart eine Scavenging-Betriebsart verwendet wird, für welche die Drehzahl der Brennkraftmaschine bezogen auf eine Maximaldrehzahl höchstens 50 %, höchstens 40 %, höchstens 30 %, höchstens 20 % oder höchstens 10 % und/oder das Drehmoment bezogen auf ein Maximaldrehmoment mindestens 25 %, mindestens 50 %, mindestens 60 %, mindestens 70 %, mindestens 80 % oder mindestens 90 % beträgt.

3. Verfahren nach einem der vorhergehenden Ansprüche, **dadurch gekennzeichnet, dass** als Katalysatorzustandsparameter zusätzlich eine Katalysatortemperatur und/oder ein Katalysatorvolumen verwendet wird.

4. Verfahren nach einem der vorhergehenden Ansprüche, **dadurch gekennzeichnet, dass** der Ventilüberschneidungsparameter zusätzlich anhand wenigstens eines Abgasturboladerzustandsparameters angepasst wird, wobei als Abgasturboladerzustandsparameter eine Abgasturboladerdrehzahl verwendet wird.

5. Verfahren nach einem der vorhergehenden Ansprüche, **dadurch gekennzeichnet, dass** der Sauerstofffüllstand mittels eines Modells anhand eines Lambdawerts und/oder eines Abgasmassenstroms ermittelt und beim Anpassen des Ventilüberschneidungsparameters die Ventilüberschneidung verringert wird, wenn der Sauerstofffüllstand einen Vorgabefüllstand überschreitet.

6. Verfahren nach einem der vorhergehenden Ansprüche, **dadurch gekennzeichnet, dass** die Verringerung der Ventilüberschneidung aus der Differenz zwischen dem Sauerstofffüllstand und dem Vorgabefüllstand bestimmt wird.

7. Verfahren nach einem der vorhergehenden Ansprüche, **dadurch gekennzeichnet, dass** der Vorgabefüllstand aus der Katalysatortemperatur, dem Katalysatorvolumen und/oder der Gesamtbetriebsdauer des Katalysators ermittelt wird.

8. Verfahren nach einem der vorhergehenden Ansprüche, **dadurch gekennzeichnet, dass** beim Anpassen des Ventilüberschneidungsparameters die Ventilüberschneidung verringert wird, wenn die Abgasturboladerdrehzahlen größer oder gleich einer Vorgabedrehzahl ist.

9. Verfahren nach einem der vorhergehenden Ansprüche, **dadurch gekennzeichnet, dass** aus einer in einen Zylinder der Brennkraftmaschine eingebrachten Luftmenge eine Kraftstoffeinspritzmenge ermittelt wird, wobei die Kraftstoffeinspritzmenge angepasst wird, wenn der Sauerstofffüllstand den Vorgabefüllstand überschreitet und/oder wenn die Katalysatortemperatur eine Vorgabetemperatur überschreitet.

10. Brennkraftmaschine, insbesondere zur Durchführung des Verfahrens nach einem oder mehreren der vorhergehenden Ansprüche, mit zumindest einem Abgasturbolader, wenigstens einem Katalysator und einem variablen Ventiltrieb, wobei vorgesehen ist, in zumindest einer Betriebsart der Brennkraftmaschine einen Ventilüberschneidungsparameter zu bestimmen und einen Ventiltrieb einzustellen, wobei die Brennkraftmaschine dazu ausgebildet ist, den Ventilüberschneidungsparameter vor dem Einstellen an dem Ventiltrieb anhand wenigstens eines Katalysatorzustandsparameters anzupassen, **dadurch gekennzeichnet, dass** als Katalysatorzustandsparameter ein Sauerstofffüllstand des Katalysators sowie eine Gesamtbetriebsdauer des Katalysators verwendet werden.

**Claims**

1. Method for operating an internal combustion engine comprising at least one exhaust turbocharger, at least one catalytic converter and a variable valve train, wherein in at least one operating mode of the internal combustion engine a valve overlap parameter is determined and adjusted to the valve train, wherein the valve overlap parameter is adjusted prior to adjustment to the valve train on the basis of at least one catalyst state parameter, **characterised in that** an oxygen fill level of the catalyst and a total operation time of the catalyst are used as the catalyst state parameters.

2. Method according to claim 1, **characterised in that** a scavenging mode is used as the operating mode, for which the rotational speed of the internal combustion engine is at most 50%, at most 40%, at most 30%, at most 20% or at most 10% of a maximum rotational speed, and/or the torque is at least 25%, at least 50%, at least 60%, at least 70%, at least 80% or at least 90% of a maximum torque.

3. Method according to any of the preceding claims, **characterised in that** a catalyst temperature and/or a catalyst volume is/are used as the at least one catalyst state parameter.

4. Method according to any of the preceding claims, **characterised in that** the valve overlap parameter is adjusted additionally on the basis of at least one exhaust turbocharger state parameter, wherein an exhaust turbocharger speed is used as the exhaust turbocharger state parameter.

5. Method according to any of the preceding claims, **characterised in that** the oxygen fill level is determined on the basis of a model based on a lambda value and/or an exhaust mass flow rate, and the valve overlap is reduced during adjustment of the valve overlap parameter when the oxygen fill level exceeds a preset fill level.

6. Method according to any of the preceding claims, **characterised in that** the reduction of the valve overlap is determined from the difference between the oxygen fill level and a preset fill level.

7. Method according to any of the preceding claims, **characterised in that** the preset fill level is determined from the catalyst temperature, the catalyst volume and/or the total operating time of the catalyst.

8. Method according to any of the preceding claims, **characterised in that** when adjusting the valve overlap parameter the valve overlap parameter is reduced, when the exhaust turbocharger rotational speed is greater than or equal to a preset rotational speed.

9. Method according to any of the preceding claims, **characterised in that** a fuel injection amount is determined from an amount of air introduced into a cylinder of the internal combustion engine, wherein the fuel injection amount is adjusted when the oxygen fill level exceeds the preset fill level and/or the catalyst temperature exceeds a preset temperature.

10. Internal combustion engine, in particular for performing the method according to one or more of the preceding claims, comprising at least one exhaust turbocharger, at least one catalytic converter and a variable valve train, wherein in at least one operating mode of the internal combustion engine a valve overlap parameter is determined and a valve train is adjusted, wherein the internal combustion engine is designed to adjust the valve overlap parameter prior to adjustment to the valve train on the basis of at least one catalyst state parameter, **characterised in that** an oxygen fill level of the catalyst and a total operation time of the catalyst are used as the catalyst state parameters.

**Revendications**

1. Procédé de fonctionnement d'un moteur à combustion interne avec au moins un turbocompresseur, au moins un catalyseur et une distribution variable, dans lequel, dans au moins un mode de fonctionnement du moteur à combustion interne, un paramètre de croisement des soupapes est déterminé et est réglé au niveau de la distribution et dans lequel le paramètre de croisement des soupapes est adapté à l'aide d'au moins un paramètre d'état de catalyseur avant le réglage au niveau de la distribution, **caractérisé en ce que** l'on utilise comme paramètre d'état de catalyseur un niveau d'oxygène du catalyseur ainsi qu'une durée de fonctionnement totale du catalyseur.

2. Procédé selon la revendication 1, **caractérisé en ce que,** comme mode de fonctionnement, on utilise un mode de fonctionnement de balayage pour lequel la vitesse de rotation du moteur à combustion interne vaut au maximum 50%, au maximum 40%, au maximum 30%, au maximum 20% ou au maximum 10%, d'une vitesse de rotation maximale et/ou le couple vaut au moins 25 %, au moins 50 %, au moins 60 %, au moins 70 %, au moins 80 % ou au moins 90 %, d'un couple maximal.

3. Procédé selon l'une quelconque des revendications précédentes, **caractérisé en ce que** l'on utilise en plus comme paramètre d'état de catalyseur une température de catalyseur et/ou un volume de catalyseur.

4. Procédé selon l'une quelconque des revendications précédentes, **caractérisé en ce que** le paramètre de croisement des soupapes est adapté en plus à l'aide d'au moins un paramètre d'état de turbocompresseur, une vitesse de rotation de turbocompresseur étant utilisée comme paramètre d'état de turbocompresseur.

5. Procédé selon l'une quelconque des revendications précédentes, **caractérisé en ce que** le niveau d'oxygène est déterminé au moyen d'un modèle à l'aide d'une valeur lambda et/ou d'un flux massique de gaz d'échappement et, lors de l'adaptation du paramètre de croisement des soupapes, le croisement des soupapes est réduit lorsque le niveau d'oxygène dépasse un niveau prescrit.

6. Procédé selon l'une quelconque des revendications précédentes, **caractérisé en ce que** la réduction du croisement des soupapes est déterminée à partir de la différence entre le niveau d'oxygène et le niveau prescrit.

7. Procédé selon l'une quelconque des revendications précédentes, **caractérisé en ce que** le niveau prescrit est déterminé à partir de la température de catalyseur, du volume de catalyseur et/ou de la durée de fonctionnement totale du catalyseur.

8. Procédé selon l'une quelconque des revendications précédentes, **caractérisé en ce que,** lors de l'adaptation du paramètre de croisement des soupapes, le croisement des soupapes est réduit lorsque la vitesse de rotation de turbocompresseur est supérieure ou égale à une vitesse prescrite.

9. Procédé selon l'une quelconque des revendications précédentes, **caractérisé en ce qu'**une quantité de carburant injecté est déterminée à partir d'une quantité d'air introduite dans un cylindre du moteur à combustion interne, laquelle quantité de carburant injecté est adaptée lorsque le niveau d'oxygène dépasse le niveau prescrit et/ou lorsque la température de catalyseur dépasse une température prescrite.

10. Moteur à combustion interne, en particulier pour la mise en oeuvre du procédé selon une ou plusieurs des revendications précédentes, avec au moins un turbocompresseur, au moins un catalyseur et une distribution variable, dans lequel il est prévu, dans au moins un mode de fonctionnement du moteur à combustion interne, de déterminer un paramètre de croisement des soupapes et de régler une distribution et dans lequel le moteur à combustion interne est conçu pour adapter le paramètre de croisement des soupapes à l'aide d'au moins un paramètre d'état de catalyseur avant le réglage au niveau de la distribution, **caractérisé en ce que** l'on utilise comme paramètre d'état de catalyseur un niveau d'oxygène du catalyseur ainsi qu'une durée de fonctionnement totale du catalyseur.

Figur

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012204885 B3
- GB 2367859 A
- DE 10303705 A1

- AT 501678 A2
- DE 102006025050 B4
- DE 102011005516 A1